# EUROPEAN PATENT APPLICATION

(11) **EP 4 651 216 A1**
(43) Date of publication of application: **19.11.2025**
(21) Application number: 25171243.6
(22) Date of filing: 17.04.2025
(51) Int. Cl.: H01M 4/04, H01M 4/505, H01M 4/525, H01M 4/02

(54) **METHOD OF MANUFACTURING ELECTRODE FOR RECHARGEABLE LITHIUM BATTERY, APPARATUS FOR MANUFACTURING ELECTRODE FOR RECHARGEABLE LITHIUM BATTERY, AND RECHARGEABLE LITHIUM BATTERY MANUFACTURED BY THE METHOD AND APPARATUS**

(30) Priority: 17.04.2024 KR 20240051522
(71) Applicant: SAMSUNG SDI CO., LTD., Yongin-si, Gyeonggi-do 17084 (KR)
(72) Inventor: Kang, Kyeung Yae, 16678 Suwon-si, Gyeonggi-do (KR)
(74) Representative: Gulde & Partner

(57) **Abstract**

A method of manufacturing an electrode for a rechargeable lithium battery includes forming a coating layer of a slurry including a positive electrode active material on at least one surface of a current collector and rolling the current collector using a first rolling roll. The first rolling roll has an initial surface roughness Ra of 0.2 µm to 0.4 µm. The method includes replacing the first rolling roll with a second rolling roll when the surface roughness Ra of the first rolling roll ranges from 150% to 400% of the initial surface roughness Ra or a traveling distance of the first rolling roll is 5,000 km to 7,000 km.

## Description

### BACKGROUND

### 1. Field

The present relates to a method of manufacturing an electrode for a rechargeable lithium battery, an apparatus for manufacturing an electrode for a rechargeable lithium battery, and a rechargeable lithium battery manufactured by the method and apparatus.

### 2. Discussion of Related Art

In recent years, with the rapid spread of electronic devices that use batteries, such as mobile phones, laptop computers, and electric vehicles, the demand for rechargeable batteries with high energy density and high capacity has rapidly increased. Accordingly, research and development for improving performance of rechargeable lithium batteries is actively underway.

A rechargeable lithium battery includes a positive electrode and a negative electrode including an active material that allows for intercalation and deintercalation of lithium ions and an electrolyte and produces electrical energy through an oxidation-reduction reaction taking place when the lithium ions are intercalated and deintercalated to and from the positive electrode and the negative electrode.

For an electrode for a rechargeable lithium battery, it is preferable to prevent electrolyte overflow at the time of electrolyte impregnation, prevent cracks, and provide increased battery capacity.

### SUMMARY OF THE DISCLOSURE

The invention is defined by the appended claims. The description that follows is subjected to this limitation. Any disclosure lying outside the scope of said claims is only intended for illustrative as well as comparative purposes.

One embodiment provides a method of manufacturing an electrode for a rechargeable lithium battery capable of preventing a battery capacity decrease and electrolyte overflow in an electrode manufactured right after roll replacement, preventing the formation of cracks in the electrode, and providing a uniform electrode thickness.

Another embodiment provides an apparatus for manufacturing an electrode for a rechargeable lithium battery capable of preventing a battery capacity decrease and electrolyte overflow in an electrode manufactured right after roll replacement, preventing the formation of cracks therein, and providing a uniform electrode thickness.

Still another embodiment provides a rechargeable lithium battery including an electrode manufactured by the method of manufacturing an electrode for a rechargeable lithium battery.

One embodiment provides a method of manufacturing an electrode for a rechargeable lithium battery.

The manufacturing method includes forming a coating layer of a slurry including a positive electrode active material on at least one surface of a current collector and rolling the current collector on which the coating layer is formed using a first rolling roll, wherein the first rolling roll has an initial surface roughness Ra of 0.2 µm to 0.4 µm, and the manufacturing method further includes replacing the first rolling roll with a second rolling roll when the surface roughness Ra of the first rolling roll ranges is 150% to 400% of the initial surface roughness Ra, or a traveling distance of the first rolling roll is 5,000 km to 7,000 km.

Another embodiment provides an apparatus for manufacturing an electrode for a rechargeable lithium battery, with the apparatus including a rolling roll including a first rolling roll, a second rolling roll, and a replacing part configured to replace the first rolling roll with the second rolling roll, wherein the first rolling roll has an initial surface roughness Ra ranging from 0.2 µm to 0.4 µm, and the replacing part is configured to replace the first rolling roll with the second rolling roll when the surface roughness Ra of the first rolling roll is 150% to 400% of the initial surface roughness Ra or a traveling distance of the first rolling roll is 5,000 km to 7,000 km.

Still another embodiment provides a rechargeable lithium battery including a positive electrode manufactured by the method of manufacturing an electrode for a rechargeable lithium battery and a negative electrode.

### BRIEF DESCRIPTION OF THE DRAWINGS

FIG. 1 shows discharge capacities of electrodes prepared before and right after replacement of a rolling roll in the manufacture of an electrode.
FIG. 2 is an illustrative diagram of a process in which an electrode is rolled by a first rolling roll or a second rolling roll according to one embodiment.
FIG. 3 shows a surface roughness Ra (µm) of a rolling roll according to a traveling distance (km), a crack depth (µm) in a manufactured electrode, and a thickness (mm) of the manufactured electrode in a method of manufacturing an electrode for a rechargeable lithium battery according to an embodiment.
FIG. 4 is an illustrative diagram of an apparatus for manufacturing an electrode for a rechargeable lithium battery according to an embodiment.
FIGS. 5 to 8 are cross-sectional views schematically illustrating a rechargeable lithium battery according to embodiments.
FIG. 9 is a view of a battery module according to an embodiment.
FIG. 10 is a view of a battery pack according to an embodiment.
FIG. 11 is a view of a battery pack according to an embodiment.
FIG. 12 is a view of a vehicle body and vehicle body components according to an embodiment.
FIG. 13 is a view of a vehicle body and vehicle body components according to an embodiment.

### DETAILED DESCRIPTION OF EXEMPLARY EMBODIMENTS

Hereinafter, embodiments of the present disclosure will be described in detail. However, the embodiments are presented as examples, and the present disclosure is not limited to the embodiments.

Unless otherwise specified in the present specification, when a part such as a layer, film, region, plate, or the like is described as being "on" another part, this not only includes a case in which the part is "directly on" the other part, but also includes a case in which another part is present therebetween.

Unless otherwise specified in the present specification, a singular expression may include a plural expression.

In the present specification, "a combination thereof" may mean a mixture, stack, composite, copolymer, alloy, blend, and reaction product of constituents.

Unless otherwise defined in the present specification, "particle diameter" may be an average particle diameter. Also, "particle diameter" refers to an average particle diameter (D50) that is a diameter of particles with a cumulative volume of 50% by volume in a particle diameter distribution. The average particle diameter (D50) may be measured by methods well known to those skilled in the art. For example, the average particle diameter (D50) may be measured using a particle size analyzer, a transmission electron microscope photograph, or a scanning electron microscope photograph. As another method, an average particle diameter (D50) value may be obtained by measuring particle diameters using a measuring device using dynamic light-scattering, performing data analysis to count the number of particles for each particle size range, and then calculating the average particle diameter therefrom. Alternatively, an average particle diameter (D50) may be measured using a laser diffraction method. More specifically, when measuring an average particle diameter (D50) using a laser diffraction method, particles to be measured may be dispersed in a dispersion medium, introduced into a commercially available laser diffraction particle diameter measurement apparatus (for example, MT3000 of Microtrac, Inc.), and irradiated with ultrasonic waves of about 28 kHz at an output of 60 W, and then the average particle diameter (D50) may be calculated based on 50% of a particle diameter distribution in the measurement apparatus.

In the present specification, "surface roughness Ra" is a surface roughness value measured for a surface of a rolling roll and may be measured by a surface roughness meter using methods known to those skilled in the art. According to embodiments, the surface roughness Ra may be an average value. The surface roughness Ra may be measured according to DIN EN ISO 21920.

In the present specification, when a numerical value range is stated, "X to Y" indicates X or more and Y or less (X ≤ value ≤ Y).

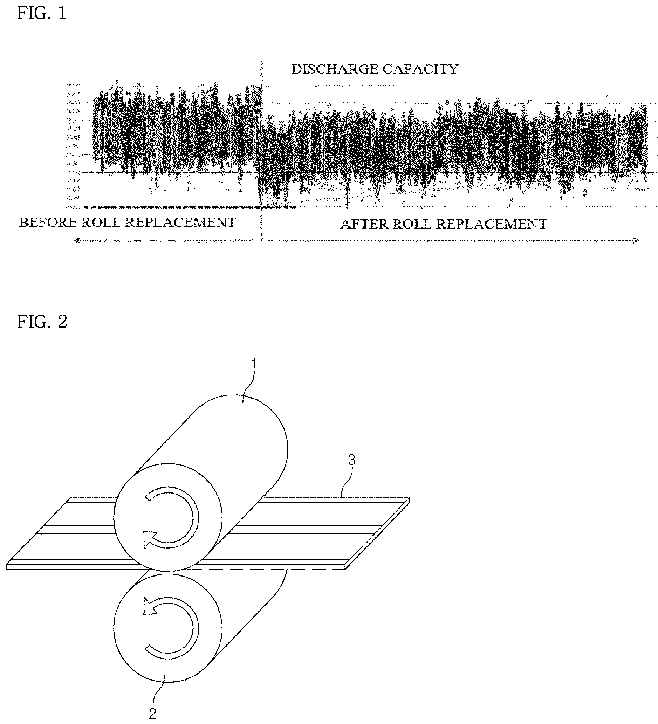

FIG. 1 shows discharge capacities of electrodes prepared before and right after replacement of a rolling roll used in an apparatus to manufacture of an electrode. Referring to FIG. 1, it can be seen that the discharge capacity of an electrode manufactured right after replacement of a rolling roll is relatively lower than that of an electrode manufactured before the replacement of the rolling roll.

Accordingly, a method of manufacturing an electrode for a rechargeable lithium battery according to an embodiment may prevent a battery capacity decrease in electrodes manufactured right after replacement of a rolling roll.

Also, the method of manufacturing an electrode for a rechargeable lithium battery according to an embodiment may prevent electrolyte overflow in a process in which an electrode is manufactured and then impregnated with an electrolyte to manufacture a battery. Also, the method of manufacturing an electrode for a rechargeable lithium battery according to an embodiment may provide an electrode having a relatively low amount of crack formation and a uniform thickness.

Also, according to an embodiment, the method of manufacturing an electrode for a rechargeable lithium battery involves a rolling process. During rolling, a coating layer is passed between upper and lower rolls (main rolls) to press the coating layer and form a coating layer with a thickness in a certain range. Over time, wear may occur on surfaces of the main rolls due to a force during rolling. Wear may occur throughout the width and area of the electrode, and, thus, it may be necessary to replace a roll after the roll travels a certain distance.

The method of manufacturing an electrode for a rechargeable lithium battery according to an embodiment includes forming a coating layer of a slurry including a positive electrode active material on a current collector and rolling the coating layer using a first rolling roll, wherein the first rolling roll has an initial surface roughness Ra ranging from 0.2 to 0.4 µm. The method further includes replacing the first rolling roll with a second rolling roll when the surface roughness Ra of the first rolling roll ranges from 150% to 400% of the initial surface roughness Ra or when a traveling distance of the first rolling roll ranges from 5,000 to 7,000 km.

According to an embodiment, the first rolling roll and the second rolling roll may each be a main roll. A main roll refers to a roll forming an electrode by primarily rolling a coating layer coated with a slurry (described below).

First, the slurry including a positive electrode active material will be described. The slurry including a positive electrode active material may include one or more of composite oxides of lithium and a metal selected from cobalt, manganese, nickel and a combination thereof. As the positive electrode active material, a compound capable of reversible intercalation and deintercalation of lithium (a lithiated intercalation compound) may be used.

The composite oxides may be lithium transition metal composite oxides. Specific examples of the composite oxides include lithium nickel oxide, lithium cobalt oxide, lithium manganese oxide, a lithium iron phosphate compound, cobalt-free nickel-manganese oxide, or a combination thereof.

As examples, the composite oxide may be a compound represented by any one of the following chemical formulas: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{d}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be a high-nickel positive electrode active material having a nickel content of 80 mol% or more, 85 mol% or more, 90 mol% or more, 91 mol% or more, or 94 mol% or more and 99 mol% or less with respect to 100 mol% of metal excluding lithium in a lithium transition metal composite oxide. The high-nickel positive electrode active material can provide high capacity and, thus, may be used in a high-capacity, high-density rechargeable lithium battery.

According to an embodiment, the positive electrode active material may include lithium nickel-cobalt-manganese (NCM) oxide. A slurry including the lithium NCM oxide may have significantly reduce electrolyte overflow, reduce crack formation, and provide for uniform thickness when used in a manufacturing method.

According to an embodiment, the lithium NCM oxide may be included in an amount of 10 to 100 wt%, 80 to 100 wt%, 90 to 100 wt% or 100 wt% of the positive electrode active material. Within these ranges, there may be reduced crack formation and a uniform thickness may be achieved when the lithium NCM oxide is used in the manufacturing method.

The amount of the positive electrode active material may be 90 wt% to 99.5 wt% of the solid content of the slurry excluding a solvent. Within this range, battery capacity may be significantly increased.

The slurry may further include a binder and a conductive additive. The amount of the binder and the amount of the conductive additive may each be 0.5 wt% to 5 wt% of the solid content of the solvent excluding the slurry. Within this range, it may be easy to manufacture an electrode.

The amount of the positive electrode active material may be 90 wt% to 99.5 wt% with respect to 100 wt% of a positive electrode active material layer. The amount of the binder and the amount of the conductive additive may each be 0.5 wt% to 5 wt% with respect to 100 wt% of the positive electrode active material layer.

The binder serves to ensure that positive electrode active materials are well adhered to each other and the positive electrode active materials are well adhered to a current collector. Examples of the binder include a polymer including polyvinyl alcohol, carboxymethyl cellulose, hydroxypropyl cellulose, diacetyl cellulose, polyvinyl chloride, carboxylated polyvinyl chloride, polyvinyl fluoride, and ethylene oxide, polyvinyl pyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acryl resin, polyester resin, nylon, and the like. But the present disclosure is not limited to these examples.

The conductive additive is used to provide conductivity to an electrode, and any electrically conductive material that does not cause a chemical change may be used as the conductive additive in a battery. Examples of the conductive additive include carbon-based materials such as natural graphite, artificial graphite, carbon black, acetylene black, ketjen black, carbon fibers, carbon nanofibers, and carbon nanotubes; metal-based materials in the form of metal powder or metal fibers and including copper, nickel, aluminum, silver, and the like; conductive polymers such as polyphenylene derivatives; or a mixture thereof.

The slurry may further include an additive that functions as a sacrificial anode.

The slurry may further include a solvent to facilitate application of the slurry. The solvent is not limited as long as the positive electrode active material, binder, and/or conductive additive can be dispersed in the solvent. The solvent may be, for example, N-methylpyrrolidone (NMP).

The solid content (that is, the remaining components including the positive electrode active material, binder, and/or conductive additive and excluding the solvent) in the slurry may range from 0.5 to 30 wt%. Within this range, the dispersibility of the slurry can be appropriately controlled, and the slurry can be uniformly applied on a current collector.

Next, a coating layer of the slurry including a positive electrode active material that is formed on a current collector will be described.

An aluminium foil may be used as the current collector, but the current collector according to the present disclosure is not limited thereto.

The coating layer may be formed by applying the slurry on the current collector. The application method is not particularly limited, and any method known in the art may be used. For example, methods such as die coating, printing, compressing, press-fitting, roller application, blade application, brush application, dipping application, spraying application, or sputtering application may be used.

The slurry may be applied so that a loading amount of the coating layer ranges from 1 mg/cm² to 80 mg/cm² on one surface of the current collector. For example, the loading amount of the positive electrode active material layer may be 1 mg/cm², 5 mg/cm², 10 mg/cm², 15 mg/cm², 20 mg/cm², 25 mg/cm², 30 mg/cm², 35 mg/cm², 40 mg/cm², 45 mg/cm², 50 mg/cm², 55 mg/cm², 60 mg/cm², 65 mg/cm², 70 mg/cm², 75 mg/cm², 80 mg/cm², 1 mg/cm² or more, 3 mg/cm² or more, 5 mg/cm² or more, or 10 mg/cm² or more and 80 mg/cm² or less, 50 mg/cm² or less, 30 mg/cm² or less, or 20 mg/cm² on one surface of the current collector. Within these ranges, less cracks may form and a uniform thickness may be achieved when the coating layer is formed in the manufacturing method.

A thickness of the coating layer may range from 1 to 200 µm. For example, the thickness of the coating layer may be 1 µm or more, 5 µm or more, 10 µm or more, or 50 µm or more and 200 µm or less, 150 µm or less, 110 µm or less, or 90 µm or less. Within these ranges, the packing density of a rechargeable lithium battery may be satisfactory.

The "thickness" may be measured using a thickness meter or using a photograph taken by an optical microscope such as a scanning electron microscope. The thickness and area of the coating layer include the thickness and area due to a binder when the binder is included in the coating layer. When measuring the thickness of the coating layer, the coating layer may be cut in a thickness direction, and a length between the lowermost end and the uppermost end of the coating layer may be measured using a commercially available thickness meter. Alternatively, a photograph of the cross-section may be taken using an optical microscope or a scanning electron microscope, and then a length between the lowermost end and the uppermost end of the coating layer shown in the photograph may be calculated as the thickness of the coating layer.

After the coating layer is formed, the current collector on which the coating layer is formed is subject to rolling using a first rolling roll.

The first rolling roll may have an initial surface roughness Ra ranging from 0.2 to 0.4 µm. Within this range, a roughness in a predetermined range is formed on electrodes that are manufactured right after roll replacement. In this process a surface area of the electrode increases, electrolyte impregnation is accelerated, and the electrolyte may not overflow. That is, when the initial surface roughness Ra of the first rolling roll is 0.2 µm or more, the electrolyte overflow may not occur. When the initial surface roughness Ra of the first rolling roll is 0.4 µm or less, the service life of the rolling roll may increase and less cracks may be formed in the electrode. Herein, "initial surface roughness" refers to a surface roughness when a new rolling roll is used in the process of manufacturing an electrode. According to an embodiment, the initial surface roughness Ra of the first rolling roll may be 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4 µm or 0.3 µm.

According to an embodiment, the first rolling roll includes a first upper rolling roll disposed adjacent to an upper surface of a current collector on which the coating layer is formed and a first lower rolling roll disposed adjacent to a lower surface of the current collector.

FIG. 2 is an illustrates a process in which an electrode is rolled by a first rolling roll according to an embodiment. Referring to FIG. 2, a current collector 3 having a coating layer formed thereon passes between a first upper rolling roll 1 and a first lower rolling roll 2. The coating layer is thereby rolled by the rotation of the first upper rolling roll 1 and the first lower rolling roll 2.

The first upper rolling roll 1 and the first lower rolling roll 2 may rotate in the same direction or different directions.

A typical rolling roll as is known to those skilled in the art may be used as the first rolling roll including the first upper rolling roll and the first lower rolling roll.

A nip pressure generated by the rolling roll may be adjusted according to the type of active material included in an active material layer. For example, a nip pressure generated by the first rolling roll may be 9 kN/cm or more, 10 kN/cm or more, or 20 kN/cm or more and 60 kN/cm or less, 50 kN/cm or less, or 40 kN/cm or less.

A surface of the rolling roll may be heated. The densification of the active material layer may be increased by heating the surface of the rolling roll. In example embodiments, the surface temperature of the rolling roll may be 150 °C or more, or 160 °C or more and 300 °C or less, 250 °C or less, or 200 °C or less. According to an embodiment, the rolling may be performed with the surface temperature of the rolling roll is 60 to 120 °C.

In a rolling process, a current collector having a coating layer formed thereon is passed between two rolling rolls and pressed to manufacture an electrode having a predetermined thickness. As the process continue, wear may occur on surfaces of the rolling rolls. Such wear may affect the electrodes, and particularly, cause cracks to be formed in the electrodes.

The method according to embodiments of the disclosure includes replacing the first rolling roll with a second rolling roll when the surface roughness Ra of the first rolling roll ranges from 150% to 400% of the initial surface roughness Ra, or when a traveling distance of the first rolling roll ranges from 5,000 to 7,000 km. In this way, cracks may not form on the surface of the electrodes, thereby preventing a decrease in battery capacity. Further, the electrode may have a uniform thickness.

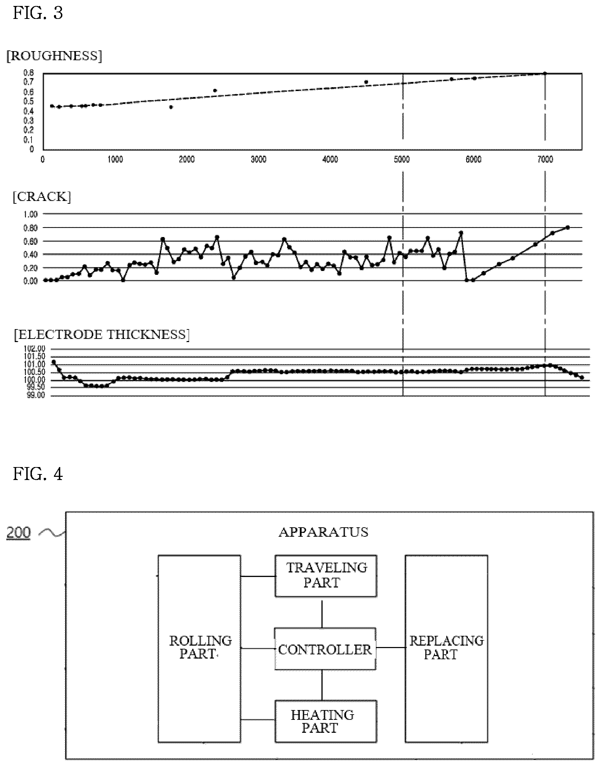

FIG. 3 shows a surface roughness Ra (µm) of a rolling roll according to a traveling distance (km) that the rolling roll has rolled, a crack depth (µm) in a manufactured electrode, and a thickness (mm) of the manufactured electrode in the method of manufacturing an electrode for a rechargeable lithium battery according to an embodiment.

Referring to FIG. 3, it can be seen that the surface roughness of the rolling roll gradually increases with an increase in the traveling distance of the rolling roll. And, the occurrence of cracks in the electrode thereby increases. However, it also can be seen that the crack depth is maintained below 0.80 µm, and the electrode thickness gradually becomes uniform in the method.

When the surface roughness Ra of the first rolling roll is 150% or more of the initial surface roughness Ra, the less cracks may form on the surface of the electrode. And when the surface roughness Ra of the first rolling roll is 400% or less of the initial surface roughness, less cracks may form on the surface of the electrode may and an electrode having a uniform thickness may be manufactured. According to one embodiment, the roughness percentage may 150%, 160%, 170%, 180%, 190%, 200%, 210%, 220%, 230%, 240%, 250%, 260%, 270%, 280%, 290%, 300%, 310%, 320%, 330%, 340%, 350%, 360%, 370%, 380%, 400%, or range from 200 to 350%.

According to one embodiment, when the first rolling roll is to be replaced with the second rolling roll, the surface roughness Ra of the first rolling roll may range from 0.7 to 0.9 µm, 0.7 µm, 0.71 µm, 0.72 µm, 0.73 µm, 0.74 µm, 0.75 µm, 0.76 µm, 0.78 µm, 0.79 µm, 0.8 µm, 0.81 µm, 0.82 µm, 0.83 µm, 0.84 µm, 0.85 µm, 0.86, 0.87 µm, 0.88 µm, 0.89 µm, 0.9 µm, 0.75 µm to 0.85 µm, or 0.7 to 0.8 µm.

When the traveling distance of the first rolling roll is 5,000 km or more, the reliability of the manufactured electrode may satisfactory and the manufacturing cost may be low. When the traveling distance is 7,000 km or less, few cracks may form on the surface of the electrode and the electrode may have a uniform. According to one embodiment, the traveling distance may be 5000 km, 5100 km, 5200 km, 5300 km, 5400 km, 5500 km, 5600 km, 5700 km, 5800 km, 5900 km, 6000 km, 6100 km, 6200 km, 6300 km, 6400 km, 6500 km, 6600 km, 6700 km, 6800 km, 6900 km, 7000 km, 5,500 to 6,500 km or may be 6,000 km.

Herein, "traveling distance" indicates a distance that a point on an outer circumferential surface of a rolling roll moves in processes in which the rolling roll rotates.

The first rolling roll may rotate at a uniform peripheral speed or a nonuniform peripheral speed. According to an embodiment, the first rolling roll may rotate at a peripheral speed of 50 to 100 m/minute for example 50, 55, 60, 650, 70, 750, 80, 85, 90, 95, 100 m/minute.

Replacement of the first rolling roll with the second rolling roll may be performed by methods known to those skilled in the art. For example, a rolling roll may be replaced manually by an electrode manufacturer, or a rolling roll may be replaced using a mechanical device.

The second rolling roll may have the same or different initial surface roughness Ra than the first rolling roll. For example, the initial surface roughness Ra of the second rolling roll may range from 0.2 to 0.4 µm. Within this range, a roughness in a predetermined range is formed on an electrode manufactured right after roll replacement. Thus, a surface area of the electrode increases, and electrolyte impregnation is accelerated, and an electrolyte may not overflow.

The second rolling roll includes a second upper rolling roll disposed adjacent to the upper surface of the current collector on which the coating layer is formed and a second lower rolling roll disposed adjacent to the lower surface of the current collector.

FIG. 2 is an illustrative diagram of a process in which an electrode is rolled by a second rolling roll according to one embodiment. Referring to FIG. 2, the current collector 3 having a coating layer formed thereon passes between a second upper rolling roll 1 and a second lower rolling roll 2. The current collector 3 having the coating layer formed thereon is rolled by the rotation of the second upper rolling roll 1 and the second lower rolling roll 2.

The second upper rolling roll 1 and the second lower rolling roll 2 may rotate in the same direction or different directions.

In rolling by the second rolling roll, a nip pressure generated by the rolling roll may be adjusted according to the type of active material included in an active material layer. For example, a nip pressure generated by the second rolling roll may be 9 kN/cm or more, 10 kN/cm or more, or 20 kN/cm or more and 60 kN/cm or less, 50 kN/cm or less, or 40 kN/cm or less.

In rolling by the second rolling roll, a surface of the rolling roll may be heated. The densification of the active material layer may be increased by heating the surface of the rolling roll. The surface temperature of the rolling roll may be, for example, 150 °C or more or 160 °C or more and 300 °C or less, 250 °C or less, and 200 °C or less.

In an electrode manufactured according to a method of the present disclosure, variation in electrode thickness may be 3 µm or less, for example, 1 µm or less or 0 µm. Within this range, uniformity of electrode thickness can be secured, thereby improving electrode manufacturing. Here, "variation in electrode thickness" indicates a difference between the maximum value of the electrode thickness and the minimum value of the electrode thickness in an electrode manufactured by rolling using the first or second rolling roll.

An electrode manufactured according to the method may have a thickness ranging from 95 to 110 µm, for example, 99 to 105 µm. The electrode manufactured may have a crack depth of 1.0 µm or less, for example, 0.8 µm or less, 0.6 µm or less, or 0 µm. The electrode manufactured may have a crack length of 0 to 2 mm or 0 mm. The electrode manufactured may have a mixture density ranging from 1.0 to 4.0 g/cc, for example, 2.0 to 4.0 g/cc, or 3.0 to 4.0 g/cc.

Another embodiment of the present disclosure relates to an apparatus for manufacturing an electrode for a rechargeable lithium battery. The apparatus rolls a coating layer on at least one surface of a current collector using a rolling roll. The manufacturing apparatus includes a rolling part having a first rolling roll and a second rolling roll, wherein the first rolling roll has an initial surface roughness Ra ranging from 0.2 to 0.4 µm. The apparatus further includes a replacing part configured to replace the first rolling roll with the second rolling roll when the surface roughness Ra of the first rolling roll ranges from 150% to 400% of the initial surface roughness or a traveling distance of the first rolling roll ranges from 5,000 to 7,000 km.

The current collector, the coating layer, the first rolling roll, and the second rolling roll are the same as those described above in relation to the method of manufacturing an electrode. Accordingly, only the apparatus for manufacturing an electrode will be described below.

According to an embodiment, the apparatus for manufacturing an electrode includes a rolling part having a first rolling roll or a second rolling roll, and a replacing part configured to replace the first rolling roll with the second rolling roll.

The rolling part rolls the current collector having the coating layer formed thereon using the first rolling roll and the second rolling roll. The rolling part rolls the current collector having the coating layer formed thereon to make a positive electrode.

The replacing part replaces the first rolling roll with the second rolling roll when the surface roughness Ra of the first rolling roll ranges from 150% to 400% of the initial surface roughness or a traveling distance of the first rolling roll ranges from 5,000 to 7,000 km. The replacing part is connected to a controller configured to control the rotation and state of the first rolling roll. The controller measures the surface roughness Ra and the traveling distance of the first rolling roll. The replacing part replaces the first rolling roll with the second rolling roll according to a signal from the controller.

The replacing part may be operated manually or may include a known auxiliary device for replacing a rolling roll.

The apparatus for manufacturing an electrode may further include the controller. The controller may include means for measuring the surface roughness and traveling distance of the first rolling roll. The controller may measure the surface roughness and traveling distance of the first rolling roll at predetermined time intervals, for example, every 1 hour or every 30 minutes.

The apparatus for manufacturing an electrode may further include a traveling part configured to move the current collector having the coating layer formed thereon.

The apparatus for manufacturing an electrode may further include a heating part configured to heat the first rolling roll or the second rolling roll. The heating part may be controlled by the controller. The controller may heat the surface of the first rolling roll or second rolling roll to heat a pressing surface that presses against the coating layer.

FIG. 4 is an illustrative diagram of an apparatus for manufacturing an electrode for a rechargeable lithium battery according to one embodiment.

Referring to FIG. 4, a manufacturing apparatus 200 may include a rolling part, a replacing part, a traveling part, a controller, and a heating part.

Still another embodiment provides a rechargeable lithium battery including a positive electrode manufactured by the method of manufacturing an electrode and a negative electrode. The positive electrode is the same as described above. The negative electrode includes a current collector and a negative electrode active material layer located on the current collector. The negative electrode active material layer may include a negative electrode active material and further include a binder and/or a conductive additive.

The negative electrode active material layer may include, for example, 90 wt% to 99 wt% of the negative electrode active material, 0.5 wt% to 5 wt% of the binder, and 0 wt% to 5 wt% of the conductive additive.

The negative electrode active material includes a material capable of reversible intercalation/deintercalation of lithium ions, lithium metal, a lithium metal alloy, a material capable of doping and dedoping lithium, or a transition metal oxide. The material capable of reversible intercalation/deintercalation of lithium ions is a carbon-based negative electrode active material, and may include, for example, crystalline carbon, amorphous carbon, or a combination thereof. Examples of the crystalline carbon include graphite such as natural graphite or artificial graphite that is irregular-shaped, plate-shaped, flake-shaped, spherical, or fibrous, and examples of the amorphous carbon may include soft carbon, hard carbon, mesophase pitch carbide, and calcinated coke.

An alloy of the lithium metal may include lithium metal and a metal selected from Na, K, Rb, Cs, Fr, Be, Mg, Ca, Sr, Si, Sb, Pb, In, Zn, Ba, Ra, Ge, Al, and Sn

An Si-based negative electrode active material or an Sn-based negative electrode active material may be used as the material capable of doping and dedoping lithium. The Si-based negative electrode active material may be silicon, a silicon-carbon composite, SiOₓ (0<x<2), an Si-Q alloy, or a combination thereof. In the Si-Q alloy, Q is selected from alkali metals, alkali earth metals, Group 13 elements, Group 14 elements (excluding Si), Group 15 elements, Group 16 elements, transition metals, rare earth elements, and combinations thereof. The Sn-based negative electrode active material may be Sn, SnO₂, an Sn-based alloy, or a combination thereof.

The silicon-carbon composite may be a composite of silicon and amorphous carbon. According to an embodiment, the silicon-carbon composite may have a form including silicon particles and amorphous carbon coated on surfaces of the silicon particles. For example, the silicon-carbon composite may include secondary particles (core) in which silicon primary particles are assembled and an amorphous carbon coating layer (shell) located on surfaces of the secondary particles. The amorphous carbon may also be located between the silicon primary particles. For example, the silicon primary particles may be coated with amorphous carbon. The secondary particles may be dispersed in an amorphous carbon matrix.

The silicon-carbon composite may further include crystalline carbon. For example, the silicon-carbon composite may include cores including crystalline carbon and silicon particles and an amorphous carbon coating layer located on surfaces of the cores.

The Si-based negative electrode active material or Sn-based negative electrode active material may be mixed with a carbon-based negative electrode active material.

The binder serves to adhere negative electrode active material particles to each other and adhere the negative electrode active material to a current collector. As the binder, a nonaqueous binder, an aqueous binder, a dry binder, or a combination thereof may be used.

Examples of the nonaqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acryl rubber, butyl rubber, fluorinated rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, polyester resin, (meth)acryl resin, phenol resin, epoxy resin, polyvinyl alcohol, or a combination thereof.

When the aqueous binder is used as the negative electrode binder, a cellulose-based compound that can impart viscosity may be further included. As the cellulose-based compound, carboxymethyl cellulose, hydroxypropyl methyl cellulose, methyl cellulose, alkali metal salts thereof, or a mixture of one or more thereof may be used. Na, K, or Li may be used as the alkali metal.

The dry binder is a polymer material that can be formed into fibers. The dry binder may be, for example, polytetrafluoroethylene, polyvinylidene fluoride, a polyvinylidene fluoride-hexafluoropropylene copolymer, polyethylene oxide, or a combination thereof.

The conductive additive is used to impart conductivity to the electrode, and any electrically conductive material that does not cause a chemical change may be used as the conductive additive in a battery. Specific examples of the conductive additive may include carbon-based materials such as natural graphite, artificial graphite, carbon black, acetylene black, ketjen black, carbon fibers, carbon nanofibers, and carbon nanotubes; metal-based materials in the form of metal powder or metal fibers and including copper, nickel, aluminum, silver, and the like; conductive polymers such as polyphenylene derivatives; or a mixture thereof.

As the negative electrode current collector, copper foil, nickel foil, stainless steel foil, titanium foil, nickel foam, copper foam, a polymer substrate having a conductive metal coated thereon, or combinations thereof may be selected and used.

The rechargeable lithium battery may further include an electrolyte that includes a nonaqueous organic solvent and a lithium salt.

The nonaqueous organic solvent serves as a medium through which ions involved in an electrochemical reaction of a battery can move. The nonaqueous organic solvent may be a carbonate-based, ester-based, ether-based, ketone-based, or alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), or the like may be used.

As the ester-based solvent, methyl acetate, ethyl acetate, n-propyl acetate, dimethyl acetate, methyl propionate, ethyl propionate, decanolide, mevalonolactone, valerolactone, caprolactone, or the like may be used.

As the ether-based solvent, dibutyl ether, tetraglyme, diglyme, dimethoxyethane, 2-methyltetrahydrofuran, 2,5-dimethyltetrahydrofuran, tetrahydrofuran, or the like may be used. Also, as the ketone-based solvent, cyclohexanone or the like may be used. As the alcohol-based solvent, ethyl alcohol, isopropyl alcohol, or the like may be used, and as the aprotic solvent, nitriles such as R-CN (R is a C2 to C20 hydrocarbon group that is straight-chain, branched, or ring-structured and may include a double bond, an aromatic ring, or an ether group); amides such as dimethylformamide; dioxolanes such as 1,3-dioxolane and 1,4-dioxolane; sulfolanes, or the like may be used.

One of the above may be used alone, or two or more of the above may be mixed and used as the nonaqueous organic solvent.

Also, when the carbonate-based solvent is used, a cyclic carbonate and a chain carbonate may be mixed and used, and the cyclic carbonate and chain carbonate may be mixed at a volume ratio of 1:1 to 1:9.

The lithium salt is a material that is dissolved in an organic solvent and acts as a supply source of lithium ions to enable the basic operation of a rechargeable lithium battery and accelerate the movement of lithium ions between a positive electrode and a negative electrode. Representative examples of the lithium salt may include LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethanesulfonate, lithium tetrafluoroethanesulfonate, lithium difluoro bis(oxalato) phosphate (LiDFOB), lithium bis(oxalato)borate(LiBOB), or two or more thereof.
The rechargeable lithium battery may further include a separator between a positive electrode and a negative electrode according to the type of rechargeable lithium battery. Polyethylene, polypropylene, polyvinylidene fluoride, or a multi-layer film of two or more thereof may be used as the separator, or a mixed multi-layer film such as a polyethylene/polypropylene double-layer separator, a polyethylene/polypropylene/polyethylene triple-layer separator, and a polypropylene/polyethylene/polypropylene triple-layer separator may also be used as the separator. The separator may include a porous base and a coating layer located on one or both surfaces of the porous base and include an organic material, an inorganic material, or a combination of an organic and inorganic materials.

The porous base may be a polymer membrane formed of a polymer selected from a polyolefin such as polyethylene or polypropylene, a polyester such as polyethylene terephthalate or polybutylene terephthalate, polyacetal, polyamide, polyimide, polycarbonate, polyether ether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon^{®}, and polytetrafluoroethylene, or a copolymer or mixture of two or more thereof.

The organic material may include a polyvinylidene fluoride-based polymer or a (meth)acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic material and inorganic material may be mixed in a single coating layer or may be in a form in which a coating layer including the inorganic material and a coating layer including the inorganic material are stacked.

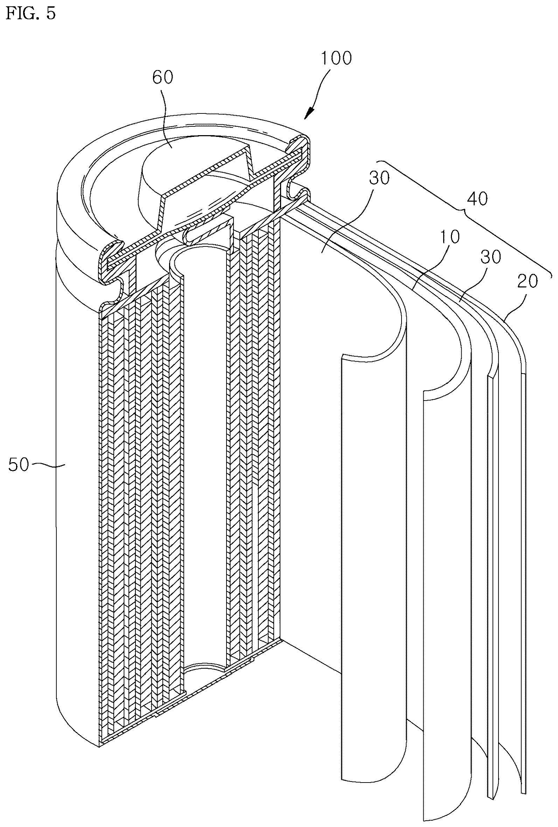

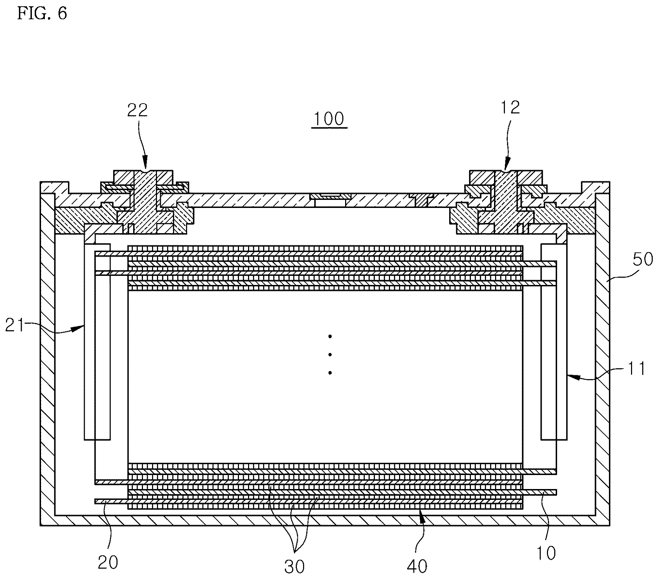

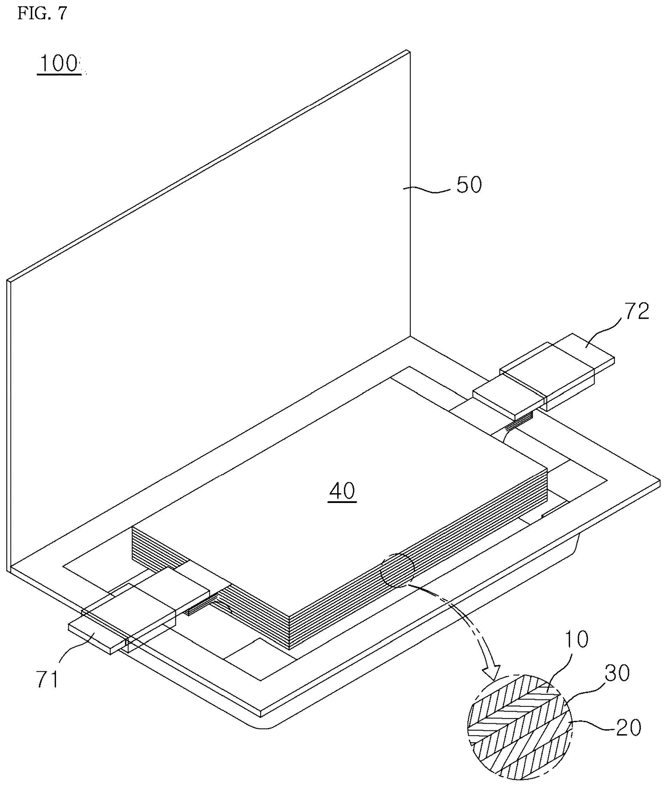

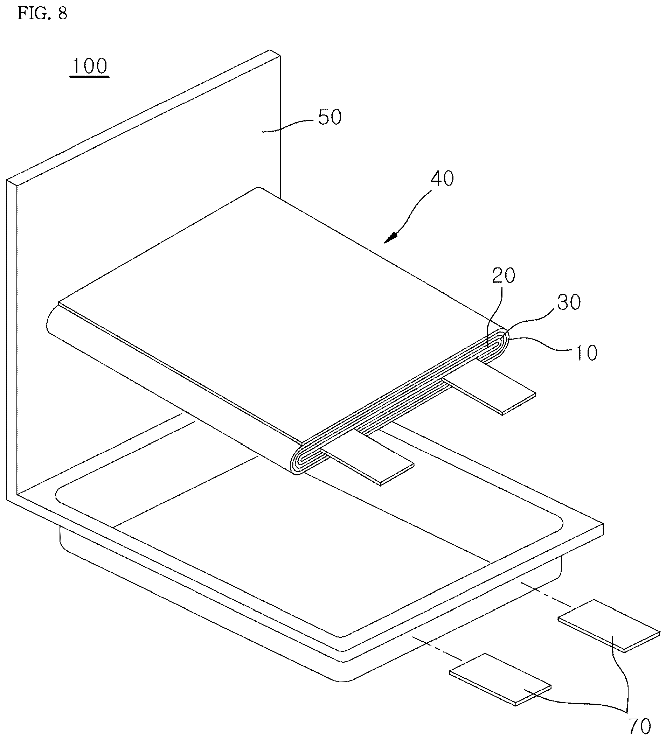

Rechargeable lithium batteries may be classified as a cylindrical type, a prismatic type, a pouch type, a coin type, and the like depending on their shape. FIGS. 5 to 8 are views schematically illustrating rechargeable lithium batteries according to embodiments, where FIG. 5 shows a cylindrical type battery, FIG. 6 shows a prismatic type battery, and FIGS. 7 and 8 show a pouch type battery. Referring to FIGS. 5 to 8, a rechargeable lithium battery 100 may include an electrode assembly 40 in which a separator 30 is interposed between a positive electrode 10 and a negative electrode 20, and a case 50 in which the electrode assembly 40 is embedded. The positive electrode 10, the negative electrode 20, and the separator 30 may be impregnated with an electrolyte (not illustrated). As shown in FIG. 5, the rechargeable lithium battery 100 may include a sealing member 60 configured to seal the case 50. Also, as shown in FIG. 6, the rechargeable lithium battery 100 may include a positive electrode lead tab 11, a positive electrode terminal 12, a negative electrode lead tab 21, and a negative electrode terminal 22. As shown in FIGS. 7 and 8, the rechargeable lithium battery 100 may include electrode tabs 70, that is, a positive electrode tab 71 and a negative electrode tab 72, which function as electrical paths for guiding the current formed in the electrode assembly 40 to outside of the battery.

The rechargeable lithium battery according to an embodiment of the present disclosure may be used in vehicles, mobile phones, or various other forms of electric devices. But the present disclosure is not limited to these examples.

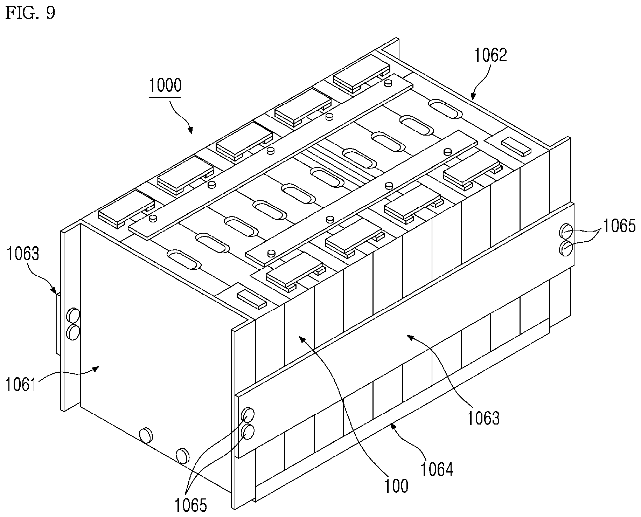

FIG. 9 is a view illustrating a battery module according to an embodiment.

Referring to FIG. 9, a battery module 1000 includes a plurality of battery cells 100 (for example, the rechargeable lithium batteries 100 described above) arranged in one direction and housings 1061, 1062, 1063, and 1064 in which the plurality of battery cells 100 are accommodated.

The housings 1061 to 1064 may include a pair of end plates 1061 and 1062 that face wide surfaces of the battery cells 100, side plates 1063 connecting the pair of end plates 1061 and 1062, and a bottom plate 1064. The side plates 1063 may support side surfaces of the battery cells 100, and the bottom plate 1064 may support bottom surfaces of the battery cells 100. Also, the pair of end plates 1061 and 1062, the side plates 1063, and the bottom plate 1064 may be connected by members such as bolts 1065.

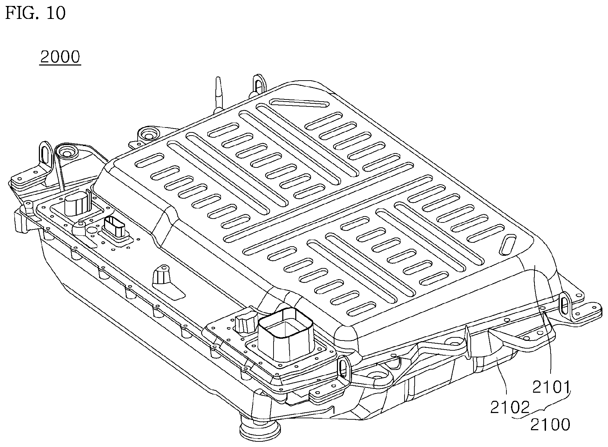

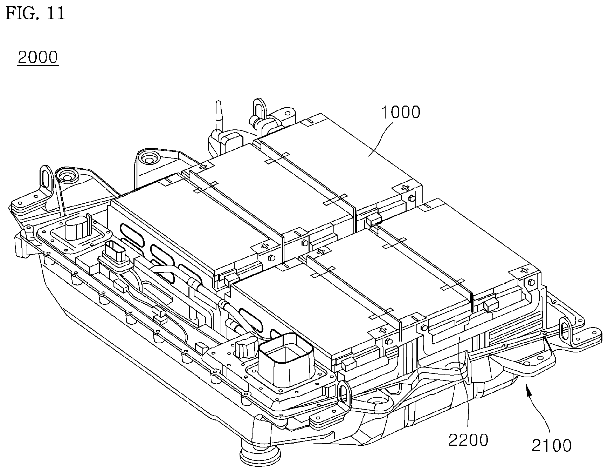

FIGS. 10 and 11 are views of a battery pack according to an embodiment.

A battery pack 2000 according to an embodiment includes an assembly of electrically connected individual batteries and a pack case accommodating the batteries. For convenience of illustration in the drawings, components such as a busbar, a cooling unit, an external terminal, and the like for electrical connection of batteries are omitted.

The battery pack 2000 may include a plurality of battery modules 1000 (for example, the battery module 1000 described above with reference to FIG. 9) and a pack case 2100 for accommodating the battery modules 1000. The pack case 2100 may include first and second pack cases 2101 and 2102 coupled to each other in directions facing each other with the plurality of battery modules 1000 interposed therebetween. The plurality of battery modules 1000 may be electrically connected to each other using a busbar 2200, or the plurality of battery modules 1000 may be electrically connected to each other in series, in parallel, or by a combination of serial and parallel connections to obtain a required electrical output.

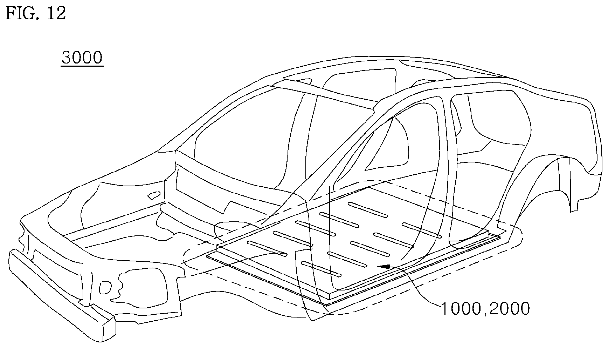

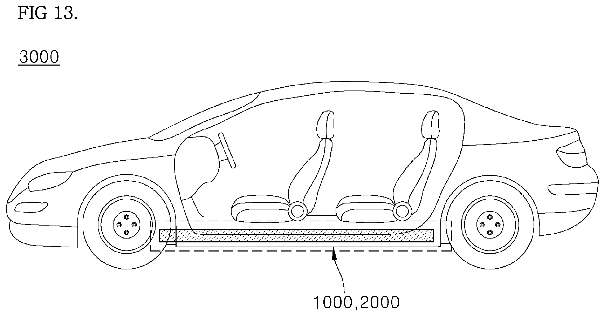

FIGS. 12 and 13 are views illustrating a vehicle body and vehicle body components according to an embodiment.

In FIGS. 12 and 13, the battery pack 2000 according to embodiments described above is mounted in a vehicle 3000. The vehicle 3000 may be an electric vehicle, a hybrid vehicle, or a plug-in hybrid vehicle. And the vehicle may be a four-wheel vehicle or a two-wheel vehicle.

As illustrated in FIGS. 12 and 13, the vehicle 3000 according to one embodiment includes the battery modules 1000 and/or the battery pack 2000 including the battery modules 1000 according to embodiments of the present disclosure. The vehicle 3000 operates by receiving power from the battery modules 1000 and/or the battery pack 2000 including the battery modules 1000.

Examples and comparative examples of the present invention now will be described. However, the present disclosure is not limited to the following examples.

### (Preparation of positive electrode slurry)

A positive electrode slurry was prepared by mixing 97 wt% LiCoNiMn oxide as a positive electrode active material, 1.5 wt% carbon nanotubes as a conductive additive, and 1.5 wt% polyvinyl fluoride as a binder, with N-methyl pyrrolidone added as a solvent.

### Example 1

A current collector having a coating layer formed thereon was prepared by applying the prepared positive electrode slurry on aluminum foil, which is a current collector, by a blade method and drying the positive electrode slurry and the aluminum foil for 30 minutes on a 100 °C hot plate.

The current collector having the coating layer formed thereon was rolled by the rolling process of FIG. 2. Specifically, a rolling surface of a first rolling roll and the coating layer were disposed to face each other, and the coating layer and the first rolling roll were hot-roll-pressed by heating the first rolling roll to 60 to 120 °C. An initial surface roughness Ra of an initially-used first rolling roll is shown in Table 1 below.

Rolling was performed by rotating the first rolling roll, and the first rolling roll was replaced with a second rolling roll when the surface roughness and traveling distance of the first rolling roll reached the surface roughness and traveling distance shown in Table 1 below.

### Examples 2 and 3, Comparative Examples 1 to 3

The same method as in Example 1 was performed except that in Example 1 above, the initial surface roughness of the first rolling roll, and the surface roughness of the first rolling roll and the traveling distance of the first rolling roll at the time the first rolling roll was replaced with the second rolling roll were changed as shown in Table 1 below.

The following physical properties were evaluated using the prepared positive electrodes, and results are shown in Table 1 below.
(1) Electrolyte overflow: A negative electrode active material slurry was prepared by mixing 97.4 wt% negative electrode active material, 1.0 wt% carboxymethyl cellulose, 1.5 wt% styrene-butadiene rubber, and 0.1 wt% carbon nanotubes as a conductive additive. Artificial graphite was used as the negative electrode active material. The prepared negative electrode slurry was applied on copper foil, and the negative electrode slurry and the copper foil were dried and rolled to manufacture a negative electrode.
   A separator was sandwiched between the manufactured positive electrode and negative electrode to prepare a laminate, and the laminate was put into a can. 3g of electrolyte (a mixed solvent of ethylene carbonate, ethyl methyl carbonate, and dimethyl carbonate having a volume ratio of 30:50:20 based on 100 parts by volume in which 1.5M LiPF₆ was dissolved) was injected to completely impregnate the laminate with the electrolyte, and the laminate was sealed, and then left at 25 °C for 12 hours. Leakage of the electrolyte was evaluated by visual inspection.
(2) Crack length: The maximum lengths of cracks formed in an electrode manufactured in the process of rolling using the first rolling roll were obtained. The crack length was measured using a ruler.
(3) Variation in electrode thickness: A difference between the maximum value and minimum value of the electrode thickness was obtained for an electrode thickness of an electrode manufactured in the process of rolling using the first rolling roll.

**[Table 1]**

| | Initial Ra of first rolling roll (µm) | At the time the first rolling roll is replaced | | | Electrolyte overflow | Crack length (mm) | Variation in electrode thickness (µm) |
|---|---|---|---|---|---|---|---|
| | | Ra(µm) | Percentage (%) | Traveling distance (km) | | | |
| Example 1 | 0.2 | 0.7 | 350 | 5,000 | No | 0~2 (0.5) | 3 or less |
| Example 2 | 0.4 | 0.8 | 200 | 7,000 | No | 0~2 | 3 or less |
| Example 3 | 0.2 | 0.7 | 350 | 6,000 | No | 0~2 (1) | 3 or less |
| Comparative Example 1 | 0.1 | 0.7 | 700 | 6,000 | Yes | 0~2 | 3 or less |
| Comparative Example 2 | 0.5 | 1.0 | 200 | 3,000 | No | 3~20 | 3 or less |
| Comparative Example 3 | 0.15 | 0.7 | 467 | 9,000 | Yes | 0~2 | 3 or less |

As shown in Table 1 above, electrolyte overflow and cracks did not occur in an electrode manufactured according to embodiments of the present disclosure, and an electrode having a uniform electrode thickness was manufactured.

On the other hand, in Comparative Example 1 in which the initial surface roughness Ra of the first rolling roll and the percentage or roughness increase did not satisfy the ranges according to the present disclosure, electrolyte overflow occurred. In Comparative Example 2, in which the initial surface roughness Ra of the first rolling roll and the traveling distance did not satisfy the ranges of the present disclosure, long cracks were formed. In Comparative Example 3, the percentage of roughness increase, and the traveling distance did not satisfy the ranges thereof according to the present disclosure, electrolyte overflow occurred.

Although exemplary embodiments of the present disclosure have been described above, the present disclosure is not limited to the exemplary embodiments and may be modified in any form within the scope of the detailed description and the accompanying drawings.

## Claims

1. A method of manufacturing an electrode for a rechargeable lithium battery (100), the method comprising:
forming a coating layer of a slurry including a positive electrode active material on at least one surface of a current collector (3); and
rolling the current collector (3) having the coating layer formed thereon using a first rolling roll,
wherein the first rolling roll has an initial surface roughness Ra in a range from 0.2 µm to 0.4 µm measured according to DIN EN ISO 21920, and
wherein the method further comprises replacing the first rolling roll with a second rolling roll when the surface roughness Ra of the first rolling roll is 150% to 400% of the initial surface roughness Ra or a traveling distance of the first rolling roll is 5,000 km to 7,000 km.

2. The method of claim 1, wherein, at the time the first rolling roll is replaced with the second rolling roll, the surface roughness Ra of the first rolling roll is 0.7 µm to 0.9 µm measured according to DIN EN ISO 21920.

3. The method of claim 1 or 2, wherein the positive electrode active material includes a lithium nickel-cobalt-manganese, NCM, oxide.

4. The method of claim 3, wherein the lithium NCM oxide is included at an amount of 10 wt% to 100 wt% of the positive electrode active material.

5. The method of any one of the preceding claims, wherein, based on solid content, the slurry includes 90 wt% to 99.5 wt% of the positive electrode active material, 0.5 wt% to 5 wt% of a binder, and 0.5 wt% to 5 wt% of a conductive additive.

6. The method of any one of the preceding claims, wherein a loading amount of the coating layer on a surface of the current collector (3) is 1 mg/cm² to 80 mg/cm².

7. The method of any one of the preceding claims, wherein the first rolling roll rotates at a peripheral speed of 50 m/minute to 100 m/minute.

8. The method of any one of the preceding claims, wherein a nip pressure of the first rolling roll is 9 kN/cm to 60 kN/cm.

9. An electrode manufactured according to the method of any one of the preceding claims, wherein a variation in a thickness of the electrode is 3 µm or less.

10. An electrode manufactured according to the method of any one of the preceding claims, wherein the electrode has a mixture density of g/cc 1.0 to 4.0 g/cc.

11. An apparatus for manufacturing an electrode for a rechargeable lithium battery (100), the apparatus comprising:
a first rolling roll;
a second rolling roll; and
a replacing part configured to replace the first rolling roll with the second rolling roll,
wherein the first rolling roll has an initial surface roughness Ra ranging from 0.2 µm to 0.4 µm measured according to DIN EN ISO 21920, and
wherein the replacing part is configured to replace the first rolling roll with the second rolling roll when the surface roughness Ra of the first rolling roll is 150% to 400% of the initial surface roughness Ra or a traveling distance of the first rolling roll is 5,000 km to 7,000 km.

12. The apparatus of claim 11, wherein the replacing part replaces the first rolling roll with the second rolling roll when the surface roughness Ra of the first rolling roll is 0.7 to 0.9 µm measured according to DIN EN ISO 21920.

13. The apparatus of claim 11, wherein an initial surface roughness Ra of the second rolling roll is 0.2 to 0.4 µm measured according to DIN EN ISO 21920.

14. The apparatus of claim 11, further comprising one or more of a traveling part configured to move a current collector (3) of the electrode having a coating layer formed thereon, a controller, and a heating part.

15. A rechargeable lithium battery (100) comprising:
an electrode manufactured by the method of claim 1 as a positive electrode (10); and
a negative electrode (20).
